# EUROPÄISCHE PATENTANMELDUNG

(11) **EP 4 752 911 A1**
(43) Veröffentlichungstag der Anmeldung: **03.06.2026**
(21) Anmeldenummer: 24216908.4
(22) Anmeldetag: 02.12.2024
(51) Int. Cl.: H01B 3/30, C08K 5/20, H01B 3/44, H01B 3/46, H01B 7/18, C08L 75/04

(54) **KABEL**

(71) Anmelder: LEONI Kabel GmbH, 91154 Roth (DE)
(72) Erfinder: Schlehuber, Rainer, 91785 Ramsberg (DE); Winter, Patrick, 91275 Auerbach (DE); Ernst, Christian, 91781 Weißenburg (DE)
(74) Vertreter: Sonnenhauser, Thomas Martin

(57) **Zusammenfassung**

Ein elektrisches oder optisches Kabel mit zumindest einer isolierten Ader und einer Innenmantelschicht umfasst eine Haftsitzregulatorzusammensetzung, die es ermöglicht, einen reproduzierbaren Wert der Abisolierkraft bei der Herstellung des Kabels zu erzielen und auf den Einsatz von Pulver in Kabeln zu verzichten.

Die Haftsitzregulatorzusammensetzung ist Bestandteil der Aderisolation und/oder der Innenmantelschicht und umfasst Poly(organo)siloxanverbindungen und Fettsäureamide. Das Kabel besitzt optional eine Außenmantelschicht, die frei ist von der Haftsitzregulatorzusammensetzung.

## Beschreibung

### BEREICH DER ERFINDUNG

Die Erfindung betrifft ein elektrisches oder optisches Kabel mit zumindest einer isolierten Ader und einer Innenmantelschicht, wobei die Innenmantelschicht und/oder die Aderisolierung der zumindest einen isolierten Ader eine Mischung aus Polymermaterial und einer Haftsitzregulatorzusammensetzung umfasst. Die Erfindung betrifft weiterhin ein Verfahren zur Verwendung einer solchen Haftsitzregulatorzusammensetzung zur Steuerung der Abisolierkraft in einem Kabel. Das erfindungsgemäße Kabel findet Einsatz in elektrischen oder optischen Anwendungen, als Sensorleitung oder als Signal- oder Datenkabel.

### HINTERGRUND DER ERFINDUNG

Die Abisolierkraft von Leitungen mit mindestens einer isolierten Ader stellt die Kraft dar, die benötigt wird, um die Mantelschicht von der darunter liegenden Verseilschicht, d.h. von den Einzeladern, zu trennen. Die Abisolierkraft ist ein wichtiger Faktor für eine reibungsfreie automatische Verarbeitung (Ablängen, Crimpen, etc.) eines Kabels.

Faktoren, die die Abisolierkraft beeinflussen sind u.a. der Druck, der im Extrusionskopf vorliegt, das Material, welches extrudiert wird oder der Abstand des Kühlbeckens nach dem Extrusionskopf. Üblicherweise werden die Adern mit Pulver beschichtet, um die Abisolierkraft zu beeinflussen um die Fertigung von Produkten zu verbessern. Damit sich das Pulver gleichmäßig auf den Adern verteilt, ist eine aufwändige Prozesssteuerung notwendig, damit die Abisolierkraft über das Kabel hinweg nicht inhomogen wird, was zu Oberflächendefekten und Mantelrissen führen könnte. Das Einstellen einer definierten Abisolierkraft ist daher grundsätzlich vorteilhaft. Außerdem kann der Einsatz von Pulver zu Verunreinigungen während der Fertigung und bei der Verarbeitung der Kabel führen, falls nicht entsprechende Vorsorgemaßnahmen getroffen werden. Schädliche Kontaminationen durch das Pulver am Verwendungs- und Verarbeitungsort des Kabels können sonst auftreten. Die vorliegende Erfindung ermöglicht die zuverlässige und reproduzierbare Steuerung der Abisolierkraft in einem Kabel, indem dem Innenmantel des Kabels und/oder der Aderisolierung der zumindest einen isolierten Ader während der Extrusion ein Haftsitzregulator beigemengt wird. Die vorliegende Erfindung ermöglicht eine Verbesserung der Reproduzierbarkeit gegenüber einer Pulver-basierten Regulierung der Abisolierkraft. Kontaminationen durch Pulver können vermieden werden. Als Haftsitzregulator wird eine Zusammensetzung mit Poly(organo)siloxanverbindungen und Fettsäureamiden eingesetzt. Die Verwendung von Poly(organo)siloxanverbindungen und Fettsäureamiden in Kabeln ist beispielsweise aus EP 2 987 015 B1 bekannt, wobei diese Zusammensetzung als Gleitmittel in der äußeren Mantelhülle eingesetzt wird, um die mechanische Reibung zwischen Kabeln zu reduzieren.

### ZUSAMMENFASSUNG DER ERFINDUNG

Die Erfindung betrifft ein elektrisches oder optisches Kabel mit zumindest einer isolierten Ader und einer Innenmantelschicht, die die mindestens eine Ader in direktem Kontakt umschließt, wobei die Innenmantelschicht und/oder die Aderisolierung der zumindest einen isolierten Ader eine Mischung aus Polymermaterial und einer Haftsitzregulatorzusammensetzung mit Poly(organo)siloxanverbindungen und Fettsäureamiden umfasst.

### DETAILLIERTE BESCHREIBUNG DER BEVORZUGTEN AUSFÜHRUNGSFORMEN

Das erfindungsgemäße Kabel weist mindestens eine isolierte Ader, eine Innenmantelschicht, wobei die Innenmantelschicht die die mindestens eine isolierte Ader in direktem Kontakt umschließt, auf, und ist dadurch gekennzeichnet, dass die Innenmantelschicht und/oder die Isolierung der mindestens einen isolierten Ader eine Mischung aus Polymermaterial und einer Haftsitzregulatorzusammensetzung mit Poly(organo)siloxanverbindungen und Fettsäureamiden umfasst oder daraus besteht. Das Kabel weist bevorzugt eine oder mehrere weitere Ummantelungen beziehungsweise Schichten und/oder Außenmantelschichten ohne Haftsitzregulatorzusammensetzung, die die Innenmantelschicht bevorzugt direkt oder indirekt umschließen, auf.

Das Kabel weist zumindest eine isolierte Ader auf, die einen Leiter sowie eine Aderisolierung umfasst. Die Ader leitet elektrischen Strom oder Licht. Der Leiter kann elektrisch leitendes Material, wie z.B. Metall, wie z.B. Kupfer, Silber, Gold, Aluminum, oder Kohlenstoff sein. Der Leiter kann ein Licht leitendes Material wie Glas oder Kunststoff sein.

Sofern mindestens zwei isolierte Adern vorhanden sind, können diese als Verseilung im Kabel vorliegen. Die Aderisolierung ist die Isolierung der mindestens einen Ader und umfasst oder besteht aus einem elektrisch isolierenden Polymermaterial, das ein Polymer ausgewählt aus EVA (Ethylenvinylacetat), XLPE (vernetztes Polyethylen), PVC (Polyvinylchlorid), TPE-S (thermoplastische Styrol-Butadien-Blockcopolymere), PE (Polyethylen), oder einem Gemisch daraus, bevorzugt EVA, enthalten kann. Die Aderisolierung kann weiterhin eine Haftsitzregulatorzusammensetzung enthalten, wobei die Haftsitzregulatorzusammensetzung in einer Menge von 1 bis 15 Gew.-%, bevorzugt 4 bis 15 Gew.-%, bezogen auf die Aderisolierung, enthalten sein kann.

Das Polymermaterial der Aderisolierung und die Haftsitzregulatorzusammensetzung liegen bevorzugt als homogene Mischung vor.

Das Kabel weist zusätzlich eine Innenmantelschicht auf, die die mindestens eine isolierte Ader in direktem Kontakt umschließt. Die Innenmantelschicht umfasst oder besteht aus einem Polymermaterial, das ein Polymer ausgewählt aus Polyurethan, Polyolefinen, thermoplastische Elastomeren, PVC (Polyvinylchlorid), oder einem Gemisch daraus, bevorzugt TPE-U, enthalten kann, und vorzugsweise weniger als 50 Gew.-%, bezogen auf das Polymermaterial, eines Polymers auf Ethylenbasis, enthält. Besonders bevorzugt enthält das Polymermaterial kein Polymer auf Ethylenbasis oder das Polymermaterial enthält zumindest kein Polyethylen.

Ein Polymer auf Ethylenbasis enthält Ethylenmonomere bzw.

Ethylenmonomereinheiten, beispielsweise besteht es zu mehr als 50 Gew.-% aus Ethylenmonomeren (d.h. zur Herstellung des Polymers wurde Ethylen (C₂H₄) eingesetzt). Die Innenmantelschicht kann weiterhin eine Haftsitzregulatorzusammensetzung enthalten, wobei die Haftsitzregulatorzusammensetzung in einer Menge von 1 bis 15 Gew.-%, bevorzugt 4 bis 15 Gew.-%, bezogen auf die Innenmantelschicht, enthalten sein kann. Thermoplastische Elastomere beschreiben Polymere, die bei Raumtemperatur elastisches Veralten zeigen und sich bei Erwärmung plastisch verformen lassen. Beispiele sind thermoplastische Elastomere auf Urethanbasis (TPE-U), thermoplastische Polyamidelastomere (TPE-A), thermoplastische Copolyesterelastomere (TPE-E), thermoplastische Elastomere auf Olefinbasis (TPE-O), thermoplastische Styrol-Blockcopolymere (TPE-S).

Das Polymermaterial der Innenmantelschicht und die Haftsitzregulatorzusammensetzung liegen bevorzugt als homogene Mischung vor.

In einem erfindungsgemäßen Kabel enthält entweder die Aderisolierung der mindestens einen Ader oder die Innenmantelschicht, oder sowohl die Aderisolierung der mindestens einen Ader als auch die Innenmantelschicht eine Haftsitzregulatorzusammensetzung.

In einer bevorzugten Ausführungsform besteht die Innenmantelschicht aus Polymermaterial, optional enthaltend Additive, und der Haftsitzregulatorzusammensetzung.

Sofern die Aderisolierung der mindestens einen Ader eine Haftsitzregulatorzusammensetzung enthält, kann die Innenmantelschicht aus Polymermaterial, optional enthaltend Additive, bestehen.

In einer weiteren bevorzugten Ausführungsform besteht die Aderisolierung der mindestens einen Ader aus Polymermaterial, optional enthaltend Additive, und der Haftsitzregulatorzusammensetzung.

Sofern die Innenmantelschicht eine Haftsitzregulatorzusammensetzung enthält, kann die Aderisolierung der mindestens einen Ader aus Polymermaterial, optional enthaltend Additive, bestehen.

Additive können beispielsweise farbgebende Pigmente, Weichmacher, Flammschutzmittel oder andere in der Kabelherstellung übliche Stoffe sein.

Das Kabel kann außerdem eine oder mehrere Außenmantelschichten enthalten, die die Innenmantelschicht umschließen. In einer Ausführungsform enthält die (äußerste) Außenmantelschicht keine Haftsitzregulatorzusammensetzung und enthält bevorzugt TPE und besonders bevorzugt TPE-U.

Die Haftsitzregulatorzusammensetzung umfasst Poly(organo)siloxanverbindungen und Fettsäureamide. Poly(organo)siloxanverbindungen können in einem Anteil von 0,5 Gew.-% bis 2 Gew.-%, vorzugsweise 1 Gew.-%, in der Haftsitzregulatorzusammensetzung vorliegen. Fettsäureamide können in einem Anteil von 0,25 Gew.-% bis 1 Gew.-%, vorzugsweise 0,5 Gew.-%, in der Haftsitzregulatorzusammensetzung vorliegen. Die Haftsitzregulatorzusammensetzung umfasst Poly(organo)siloxanverbindungen und Fettsäureamide in einem Gewichtsverhältnis von Poly(organo)siloxanverbindungen zu Fettsäureamide von 5:1 bis 1:1, bevorzugt von 4:1 bis 2:1, besonders bevorzugt von 3:1.

Die Haftsitzregulatorzusammensetzung umfasst ferner Poly(organo)siloxanverbindungen und Fettsäureamide, die vorzugsweise in einer Polymermatrix gebunden sind. Die Polymermatrix besteht vorzugsweise aus einem Kunststoff, der kompatibel ist mit TPE-U, TPE-O, PE, PP und EVA, und besteht besonders bevorzugt aus PE und/oder PP.

Der Ausdruck "mindestens eine Poly(organo)siloxanverbindung" bedeutet, dass mindestens eine Art (darstellbar durch eine bestimmte Strukturformel, wobei der Polymerisierungsgrad unterschiedlicher Moleküle einer Art unterschiedlich sein kann) einer Poly(organo)siloxanverbindung vorhanden ist und bedeutet nicht, dass mindestens ein Molekül davon vorhanden ist.

Poly(organo)siloxanverbindungen sind lineare, verzweigte oder zyklische Moleküle, oder Mischungen daraus, in denen Siliziumatome und Sauerstoffatome alternierend verbunden sind. Siliziumatome sind im Allgemeinen mit zwei Kohlenwasserstoffgruppen, wie beispielsweise Alkylgruppen, insbesondere Methyl- oder Ethylgruppen substituiert. Endständige Siliziumatome sind mit drei Kohlenwasserstoffgruppen substituiert. Siliziumatome, die eine Verzweigung im Molekül darstellen, sind mit nur einer oder keiner Kohlenwasserstoffgruppe substituiert. In einer bevorzugten Ausführung sind die Poly(organo)siloxanverbindungen nicht-flüchtig. Nicht-flüchtige Poly(organo)siloxanverbindungen weisen einen Dampfdruck von weniger als 2 mm Hg bei 20 °C auf.

In einer besonders bevorzugten Ausführung werden als Poly(organo)siloxanverbindungen Dimethylsilikonverbindungen verwendet. Dimethylsilikonverbindungen zeichnen sich dadurch aus, dass die an den Siliziumatomen substituierten Kohlenwasserstoffgruppen Methylgruppen (-CH₃) sind. Ein Beispiel für eine Dimethylsilikonverbindung ist Polydimethylsiloxan (PDMS, Dimethicon).

Molmassen der Poly(organo)siloxanverbindungen können zwischen 10.000 und 500.000 g/mol liegen, bevorzugt zwischen 30.000 und 400.000 g/mol, besonders bevorzugt zwischen 50.000 und 300.000 g/mol, insbesondere bevorzugt zwischen 80.000 und 300.000 g/mol.

Der Ausdruck "mindestens ein Fettsäureamid" bedeutet, dass mindestens eine Art (darstellbar durch eine bestimmte Strukturformel) eines Fettsäureamids vorhanden ist und bedeutet nicht, dass mindestens ein Molekül davon vorhanden ist. Fettsäureamide sind organische Moleküle, die eine Amidgruppe tragen und strukturell von einer Fettsäure abgeleitet sind. Im erfindungsgemäßen Kabel werden bevorzugt primäre Fettsäureamide verwendet. In primären Fettsäureamiden befindet sich genau eine Acylgruppe am Amid-Stickstoff. Der Amid-Stickstoff kann neben dem Fettsäuremolekülrest zwei, eine oder keine organische Gruppe tragen.

Beispiele für Fettsäureamide sind: Valeriansäureamid, Capronsäureamid, Enanthinsäureamid, Caprylsäureamid, Pelargonsäureamid, Caprinsäureamid, Undecansäureamid, Laurinsäureamid, Tridecansäureamid, Myristinsäureamid, Pentadecansäureamid, Palmitinsäureamid, Heptadecansäureamid, Stearinsäureamid, Nonadecansäureamid, Arachinsäureamid, Behensäureamid, Lignocerinsäureamid, Cerotinsäureamid, Palmitoleamid, Oleamid, Linoleamid, Linolenamid, Gadoleamid, Arachidonamid, Eicosapentaenamid, Erucamid, Docosahexaenamid, Nervonamid, bevorzugt Erucamid (Synonym: Erucasäureamid) und Stearinsäureamid, besonders bevorzugt Erucamid, oder Mischungen daraus, wobei diese Fettsäureamide zwei, eine oder keine organische Gruppe neben dem Fettsäuremolekülrest am Amid-Stickstoff aufweisen können.

Das erfindungsgemäße Kabel enthält bevorzugt kein Pulver zwischen den Schichten des Kabels, insbesondere befindet sich vorzugsweise kein Pulver, insbesondere kein Haftsitzregulator-Pulver, zwischen der mindestens einen isolierten Ader oder einer Verseilung mehrerer isolierter Adern und der Innenmantelschicht. Haftsitzregulator-Pulver beschreibt jedes pulverförmige Material, das im Kabel eingesetzt wird, um die Abisolierkraft zu beeinflussen.

Das erfindungsgemäße Kabel kann Einsatz in elektrischen oder optischen Anwendungen, als Sensorleitung oder als Signal- oder Datenkabel finden.

Die hierin beschriebene Gestaltung des Kabels ermöglicht das Einstellen einer definierten Abisolierkraft. Die Abisolierkraft ein- oder mehradriger Leitungen stellt die Kraft dar, welche benötigt wird, um die Innenmantelschicht von der darunter liegenden Ader oder der "Verseilschicht" (Einzeladern) zu trennen. Die Abisolierkraft wird auf einer definierten Länge des zu prüfenden Kabels sowie mit einer definierten Abzugsgeschwindigkeit des Mantels von der mindestens einen Ader oder der Verseilung mehrerer Adern definiert und in Newton [N] mit einer Toleranzspanne von üblicherweise 15 - 25 N angegeben.

Ein erfindungsgemäßes Kabel weist bevorzugt eine Abisolierkraft von weniger als 70 Newton, vorzugsweise weniger als 60 Newton, besonders bevorzugt weniger als 50 Newton, nach 700 Stunden Lagerdauer (25°C; 50% RH) auf. Die Messung erfolgt vorzugsweise über eine Abzugslänge von 30 mm - 100 mm und einer Abzugsgeschwindigkeit von 30 - 250 mm/min. Die ermittelte Abisolierkraft weist bevorzugt eine Standardabweichung von weniger als 3,0, vorzugsweise weniger als 2,0, und besonders bevorzugt weniger als 1,0 auf.

Die Haftsitzregulatorzusammensetzung weist bevorzugt keine Migrationsneigung auf, wobei die Haftsitzregulatorzusammensetzung nicht an der Oberfläche der Außenmantelschicht akkumuliert. Die Messung erfolgt bevorzugt mittels REM-EDX, indem nach einer Lagerung von 3000 Stunden bei 125 °C die Oberfläche der Außenmantelschicht des Kabels analysiert wird und die detektierte Elementzusammensetzung mit einem Kabel ohne Haftsitzregulatorzusammensetzung verglichen wird. Insbesondere ein Unterschied in der Silizium-Konzentration auf der Oberfläche der Außenmantelschicht würde auf eine Migration der Haftsitzregulatorzusammensetzung hindeuten.

Die erfindungsgemäßen Kabel können Wickelprüfungen bei niedriger Temperatur, Spannungsprüfungen und 90° Biegewechseltests im ungealterten und im gealterten Zustand bestehen. Sie können Spannungsprüfungen bei thermischer Überlast von bis zu 195 °C für 6 Stunden bestehen.

Das Mantelmaterial (Außenmantelschicht und Innenmantelschicht mit Haftsitzregulatorzusammensetzung) kann vor und nach Alterung gute Werte für die Zugfestigkeit und für die Dehnung bei Bruch aufweisen.

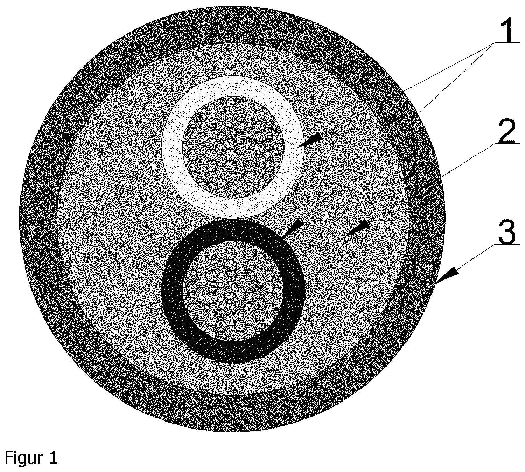

Figur 1 zeigt schematisch den Querschnitt eines erfindungsgemäßen Kabels mit (1) zwei isolierten Adern, (2) der Innenmantelschicht, die in direktem Kontakt die zwei Adern umschließt, und (3) eine Außenmantelschicht, die die Innenmantelschicht umschließt. Die Aderisolierung der Adern und/oder die Innenmantelschicht enthalten eine wie vorstehend beschriebene Haftsitzregulatorzusammensetzung.

Die Erfindung betrifft weiterhin die Verwendung einer Haftsitzregulatorzusammensetzung umfassend Poly(organo)siloxanverbindungen und Fettsäureamiden in einer Mischung mit einem elektrisch isolierenden Polymer als Aderisolierung einer elektrisch isolierten Ader und/oder als Innenmantelschicht, die in direktem Kontakt mit der elektrisch isolierten Ader steht, zur Steuerung der Abisolierkraft in einem wie vorstehend beschriebenen Kabel.

Durch die Verwendung einer Haftsitzregulatorzusammensetzung weist das Kabel vorzugsweise eine Abisolierkraft, gemessen über eine Abzugslänge von 30 mm - 100 mm und einer Abzugsgeschwindigkeit von 30 - 250 mm/min, mit einer Streubreite von maximal 5,0 Newton nach maximal 6 Monaten Lagerdauer auf. Dabei liegt die ermittelte Standardabweichung bevorzugt bei weniger als 3,0, vorzugsweise bei weniger als 2,0, und besonders bevorzugt bei weniger als 1,0.

Die Steuerung der Abisolierkraft beschreibt, dass bei der Fertigung des Kabels eine gewünschte Abisolierkraft gezielt und reproduzierbar erreicht werden kann.

Die hier beschriebene Erfindung ermöglicht somit die Fertigung von Kabeln mit eng definierter Abisolierkraft. Eine Abisolierkraft außerhalb der angestrebten Vorgabe kann dazu führen, dass Maschinen bei der Weiterverarbeitung erhöhten Ausschuss produzieren, ausfallen oder manuelle Nacharbeit erforderlich ist. Sie verursachen außerdem Mehrarbeit, Kundenreklamationen und höhere Abfallraten. Durch das reproduzierbare Einstellen einer vorteilhaften Abisolierkraft des Kabels können diese Nachteile vermieden werden.

Darüber hinaus wird durch den Einsatz der Haftsitzregulatorzusammensetzung die Verwendung von Pulver zur Steuerung der Abisolierkraft obsolet, was die Nachteile der Verwendung von Pulver, insbesondere das Risiko von Oberflächendefekten sowie die Verunreinigung der Maschinen am Ort der Kabelfertigung sowie der Umgebung am Ort der Kabelbearbeitung (Ablängen, Crimpen, etc.), vermeidet.

### BESCHREIBUNG DER FIGUR

Figur 1: Querschnitt eines erfindungsgemäßen Kabels. Die isolierten Adern (1) sind in direktem Kontakt von der Innenmantelschicht (2) umgeben. Die Innenmantelschicht ist von einer Außenmantelschicht (3) umgeben. Die Innenmantelschicht (2) und oder die Aderisolierung der Adern (1) enthalten die hierin beschriebene Haftsitzregulatorzusammensetzung.

### BEISPIELE

### Beispiel 1: Herstellung

Ein erfindungsgemäßes Kabel mit einem Anteil einer Haftsitzregulatorzusammensetzung in der Innenmantelschicht von 10 Gew.-% wurde hergestellt, indem zu dem Polymermaterial der Innenmantelschicht (TPE-U, Thermoplastisches Elastomer auf Polyurethanbasis) die Haftsitzregulatorzusammensetzung (enthaltend Dimethylsilikonverbindungen ca. 1% und Erucasäureamid als Fettsäureamid in ca. 0,5% in einer Polymermatrix) über eine Dosiereinheit zugegeben wurde und homogen in der Dosiereinheit und in einem Einschneckenextruder durchmischt wurde. Das Gemisch wurde im Extruderkopf des Einschneckenextruders als Innenmantelschicht auf eine Sensorleitung (2 Adern, EVA Aderisolationsmaterial) extrudiert. In einem zweiten Schritt wurde eine Außenmantelschicht (TPE-U, Thermoplastisches Elastomer auf Polyurethanbasis) auf die Innenmantelschicht extrudiert.

### Beispiel 2: Abisolierkraft

Die Abisolierkraft eines erfindungsgemäßen Kabels aus Beispiel 1 (Kabel 1) wurde zu bestimmten Zeitpunkten über einen Zeitraum von 6 Monaten gemessen und mit einem Kabel mit Pulver (fettsäurehaltige Substanzen) zwischen Adern und Innenmantelschicht ohne erfindungsgemäßer Haftsitzregulatorzusammensetzung (Kabel 2) verglichen.

Die Abisolierkraft kann bestimmt werden, indem der Mantel und die Innenmantelschicht am Kabelende eines zu prüfenden Kabels eingeschnitten werden, das Kabel und die Ader in einer geeigneten Apparatur befestigt werden, wobei entweder am Kabel oder an der Ader ein Kraftmessgerät angebracht ist, und die Kraft aufgezeichnet wird, die erreicht wird, wenn die Ader aus dem Kabel gezogen (abisoliert) wird.

Die Messung erfolgte automatisiert mit durchweg identischen Messparametern über eine Abzugslänge von 50 mm mit einer Abzugsgeschwindigkeit von 50 mm/min. Die ermittelte Kraft (in Newton) ist in Tabelle 1 gelistet.

**Tabelle 1: Zeitlicher Verlauf der Abisolierkraft eines erfindungsgemäßen Kabels in Newton.**

| Lagerdauer | MIN | MAX | AVG | StAbw. | N* |
|---|---|---|---|---|---|
| 24 h | 9,8 | 12,6 | 11 | 0,7 | 53 |
| 1 Woche | 9,7 | 13,9 | 11,2 | 0,9 | 48 |
| 2 Wochen | 10 | 13,3 | 11,3 | 0,8 | 48 |
| 4 Wochen | 10,8 | 14,8 | 12,7 | 0,9 | 50 |
| 2 Monate | 10,3 | 15,2 | 11,8 | 1 | 93 |
| 3 Monate | 11,0 | 17,3 | 13,4 | 1,4 | 49 |
| 6 Monate | 10,6 | 15,5 | 13,0 | 1,4 | 49 |
| Kabel 2 | 8,0 | 54,6 | 33,6 | 8,9 | 1722 |

| | | | | | |
|---|---|---|---|---|---|
| * Anzahl der Stichproben. | | | | | |

Im Vergleich zum Kabel ohne erfindungsgemäßer Haftsitzregulatorzusammensetzung wurden deutlich niedrigere durchschnittliche Abisolierkräfte mit Standardabweichungen von unter 2,0, teilweise unter 1,0, ermittelt.

### Beispiel 3: Untersuchung der Oberfläche auf Migration

Ein erfindungsgemäßes Kabel (Kabel 1) und ein Vergleichskabel (Kabel 2) gemäß Beispiel 2 wurden 3000 Stunden bei 125 ± 3 °C gelagert. Die Migrationsneigung der Haftsitzregulatorzusammensetzung aus der Innenmantelschicht an die Kabeloberfläche wurde mittels REM/EDX untersucht.

Nach der Alterung konnte auf den Kabeloberflächen beider Kabel mikroskopisch ein Schmierfilm festgestellt werden. Mittels REM-EDX-Analyse konnten nur organische Bestandteile detektiert werden, die aus dem Material des Außenmantels stammen. Auf der Manteloberfläche von Kabel 1 konnte keine erhöhte Menge an Silizium, und somit an Silikonverbindungen, die aus der Haftsitzregulatorzusammensetzung stammen würden, gegenüber dem Vergleichskabel 2 festgestellt werden. Somit enthielt der Schmierfilm keine feststellbare Menge an Haftsitzregulatorzusammensetzung und eine Migrationsneigung der Haftsitzregulatorzusammensetzung konnte ausgeschlossen werden.

### Beispiel 4: Langzeitalterung

Ein erfindungsgemäßes Kabel (Kabel 1) und ein Vergleichskabel (Kabel 2) gemäß Beispiel 2 wurden nach je 1000, 2000, 2500 und 3000 Stunden Lagerung bei 125 ± 3 °C einer Wickelprüfung bei Raumtemperatur und einer Spannungsprüfung nach ISO 19642-2:2019-01; DIN EN 60811-509:2018-05 unterzogen.

Die Wickelprüfung wurde an einem Dorn mit Durchmesser 25,5 mm, einem Gewicht von 5 kg und einer Geschwindigkeit von 0,2 s⁻¹ durchgeführt. Bei der Spannungsprüfung wurde für 3 Sekunden eine Spannung von 2 kV angelegt. Sowohl bei Kabel 1 als auch bei Kabel 2 wurden in keiner der Wickelprüfungen Risse oder Brüche festgestellt. Bei keiner der Spannungsprüfungen kam es zu einem Durchschlag.

### Beispiel 5: Thermische Überlast

Ein erfindungsgemäßes Kabel (Kabel 1) und ein Vergleichskabel (Kabel 2) gemäß Beispiel 2 wurden nach 6 Stunden Lagerung in gehängtem Zustand bei je 175±3 °C, 185±3 °C, 195±3 °C und 205±3 °C einer Wickelprüfung bei Raumtemperatur und einer Spannungsprüfung nach ISO 19642-2:2019; DIN EN 60811-509:2018-05 unterzogen.

Die Wickelprüfung wurde an einem Dorn mit Durchmesser 25,5 mm, einem Gewicht von 5 kg und einer Geschwindigkeit von 0,2 s⁻¹ durchgeführt. Bei der Spannungsprüfung wurde für 3 Sekunden eine Spannung von 2 kV angelegt. Sowohl bei Kabel 1 als auch bei Kabel 2 wurden in keiner der Wickelprüfungen bis einschließlich 195±3 °C Risse oder Brüche festgestellt und bei keiner dieser Spannungsprüfungen kam es zu einem Durchschlag.

In Folge der Tests bei 205±3 °C sind die Mantelschichten der Kabel geschmolzen.

### Beispiel 6: Wärmeschock

Ein erfindungsgemäßes Kabel (Kabel 1) und ein Vergleichskabel (Kabel 2) gemäß Beispiel 2 wurden über 1 Stunde bei je 175±3 °C, 185±3 °C, 195±3 °C und 205±3 °C einer Wickelprüfung nach ISO 19642-2:2019; DIN EN 60811-509:2018-05 unterzogen.

Die Wickelprüfung wurde an einem Dorn mit Durchmesser 13 mm durchgeführt. Sowohl bei Kabel 1 als auch bei Kabel 2 wurden in keiner der Wickelprüfungen bis einschließlich 195±3 °C Risse oder Brüche festgestellt. In Folge der Tests bei 205±3 °C sind die Mantelschichten der Kabel geschmolzen.

### Beispiel 7: Wickelprüfung bei niedriger Temperatur

Ein erfindungsgemäßes Kabel gemäß Beispiel 1 (Kabel 1) und ein erfindungsgemäßes Kabel nach einer Kurzzeitalterung von 240 Stunden bei 150±3 °C (Kabel 3) wurden über 4 Stunden bei -40 °C (Kabel 1), bzw. bei -25 °C (Kabel 3) einer Wickelprüfung bei Raumtemperatur und einer Spannungsprüfung unterzogen. Die Wickelprüfung wurde an einem Dorn mit Durchmesser 25 mm, einem Gewicht von 5 kg und einer Geschwindigkeit von 0,2 s⁻¹ durchgeführt. Bei der Spannungsprüfung wurde für 3 Sekunden eine Spannung von 2 kV angelegt.

Sowohl bei Kabel 1 als auch bei Kabel 3 wurden in keiner der Wickelprüfungen Risse oder Brüche festgestellt. Bei keiner der Spannungsprüfungen kam es zu einem Durchschlag.

### Beispiel 8: Zugfestigkeit des Mantelmaterials

Die Zugfestigkeit und die Dehnung bei Bruch wurden für ein erfindungsgemäßes Mantelmaterial (Mantel 1), bestehend aus einer Innenmantelschicht mit Haftsitzregulatorzusammensetzung (analog Beispiel 1) und einer Außenmantelschicht (analog Beispiel 1) und ein gleiches erfindungsgemäßes Mantelmaterial nach einer Kurzzeitalterung von 240 Stunden bei 150±3 °C (Mantel 2) gemessen. Die Messung erfolgte nach DIN EN 60811-501:2019-04; ISO14572:2011-10-01 mit einer Geschwindigkeit von 250 mm/min. Die Ergebnisse sind in Tabelle 2 gelistet.

**Tabelle 2: Ergebnisse der Zugfestigkeitsprüfung.**

| | | Zugfestigkeit, N/mm² | Dehnung bei Bruch, % |
|---|---|---|---|
| Mantel 1 | min. | 47,7 | 506 |
| | med. | 51,5 | 523 |
| | max. | 52,2 | 548 |
| Mantel 2 | min. | 19,9 | 406 |
| | med. | 21,5 | 455 |
| | max. | 22,4 | 457 |

## Patentansprüche

1. Kabel aufweisend:
- mindestens eine isolierte Ader,
- eine Innenmantelschicht, wobei die Innenmantelschicht die mindestens eine isolierte Ader in direktem Kontakt umschließt,
**dadurch gekennzeichnet, dass**
die Innenmantelschicht und/oder die Isolierung der mindestens einen isolierten Ader eine Mischung aus Polymermaterial und einer Haftsitzregulatorzusammensetzung umfasst, wobei die Haftsitzregulatorzusammensetzung mindestens eine Poly(organo)siloxanverbindung und mindestens ein Fettsäureamid enthält, und
- optional eine oder mehrere weitere Ummantelungen und/oder Außenmantelschichten ohne Haftsitzregulatorzusammensetzung.

2. Kabel nach Anspruch 1, wobei das Kabel kein Pulver umfasst, insbesondere befindet sich kein Pulver, insbesondere kein Haftsitzregulator-Pulver, zwischen der mindestens einen isolierten Ader und der Innenmantelschicht.

3. Kabel nach Anspruch 1 oder Anspruch 2, wobei das Kabel zur Verwendung als Sensorleitung geeignet ist.

4. Kabel nach einem der vorhergehenden Ansprüche, wobei das Polymermaterial der Isolierung der mindestens einen Ader ein Polymer, ausgewählt aus EVA (Ethylenvinylacetat), XLPE (vernetztes Polyethylen), PVC (Polyvinylchlorid), TPE S (thermoplastische Styrol-Butadien-Blockcopolymere), PE (Polyethylen), oder ein Gemisch daraus, bevorzugt EVA, umfasst.

5. Kabel nach einem der vorhergehenden Ansprüche, wobei das Polymermaterial der Innenmantelschicht ein Polymer, ausgewählt aus Polyurethan, Polyolefinen, thermoplastische Elastomeren, PVC (Polyvinylchlorid), oder einem Gemisch daraus, bevorzugt TPE-U, umfasst, und vorzugsweise weniger als 50 Gew.-%, bezogen auf das Polymermaterial, eines Polymers auf Ethylenbasis, insbesondere Polyethylen, enthält.

6. Kabel nach einem der vorhergehenden Ansprüche, wobei die Innenmantelschicht und/oder die Isolierung der mindestens einen Ader aus Polymermaterial, optional enthaltend Additive, und der Haftsitzregulatorzusammensetzung besteht.

7. Kabel nach einem der vorhergehenden Ansprüche, wobei die Mischung aus dem Polymermaterial und der Haftsitzregulatorzusammensetzung der Innenmantelschicht und/oder die Mischung aus dem Polymermaterial und der Haftsitzregulatorzusammensetzung der Isolierung der mindestens einen Ader homogen ist.

8. Kabel nach einem der vorhergehenden Ansprüche, wobei die Haftsitzregulatorzusammensetzung in der Innenmantelschicht in einer Menge von 1 bis 15 Gew.-%, bevorzugt 4 bis 15 Gew. % bezogen auf die Innenmantelschicht, und/oder in der Isolierung der mindestens einen Ader in einer Menge von 1 bis 15 Gew.-%, bevorzugt 4 bis 15 Gew. %, bezogen auf die Isolierung der mindestens einen Ader vorliegt, wobei die Haftsitzregulatorzusammensetzung vorzugsweise 1 Gew.-% der mindestens einen Poly(organo)siloxanverbindung und 0,5 Gew.-% des mindestens einen Fettsäureamids umfasst.

9. Kabel nach einem der vorhergehenden Ansprüche, wobei die Haftsitzregulatorzusammensetzung die mindestens eine Poly(organo)siloxanverbindung und das mindestens eine Fettsäureamid in einem Gewichtsverhältnis von 5:1 bis 1:1 umfasst.

10. Kabel nach einem der vorhergehenden Ansprüche, wobei die mindestens eine Poly(organo)siloxanverbindung eine Dimethylsilikonverbindung ist, und/oder die mindestens eine Poly(organo)siloxanverbindung eine Molmasse zwischen 10.000 und 500.000 g/mol aufweist.

11. Kabel nach einem der vorhergehenden Ansprüche, wobei das Kabel eine Abisolierkraft, gemessen über eine Abzugslänge von 30 mm - 100 mm und einer Abzugsgeschwindigkeit von 30 - 250 mm/min, von weniger als 70 Newton nach 700 Stunden Lagerdauer, bevorzugt mit einer Standardabweichung von weniger als 3,0, vorzugsweise weniger als 2,0, besonders bevorzugt weniger als 1,0, aufweist.

12. Kabel nach einem der vorhergehenden Ansprüche, wobei nach 3000 Stunden bei 125 °C der Haftsitzregulator keine Migrationsneigung aufweist, analysiert mittels REM-EDX, wobei die Haftsitzregulatorzusammensetzung nicht an der Oberfläche der Außenmantelschicht akkumuliert.

13. Verwendung einer Haftsitzregulatorzusammensetzung, umfassend mindestens einer Poly(organo)siloxanverbindung und mindestens einem Fettsäureamid, in einer Mischung mit einem elektrisch isolierenden Polymer als Isolierung mindestens einer elektrisch isolierten Ader und/oder als Innenmantelschicht, die in direktem Kontakt mit der mindestens einen elektrisch isolierten Ader steht, zur Steuerung der Abisolierkraft in einem Kabel nach einem der Ansprüche 1 - 12.

14. Verwendung einer Haftsitzregulatorzusammensetzung nach Anspruch 13, wobei das Kabel eine Abisolierkraft, gemessen über eine Abzugslänge von 30 mm - 100 mm und einer Abzugsgeschwindigkeit von 30 - 250 mm/min, mit einer Streubreite von maximal 5,0 Newton nach maximal 6 Monaten Lagerdauer, bevorzugt mit einer Standardabweichung von weniger als 3,0, vorzugsweise weniger als 2,0, besonders bevorzugt weniger als 1,0, aufweist.
